# EUROPEAN PATENT SPECIFICATION

(11) **EP 3 933 353 B1**
(45) Date of publication and mention of the grant of the patent: **06.12.2023**
(21) Application number: 21182296.0
(22) Date of filing: 29.06.2021
(51) Int. Cl.: G01F 22/00, E04G 21/04

(54) **A HOSE REEL UNIT AND A METHOD OF A HOSE REEL UNIT**
SCHLAUCHROLLENEINHEIT UND VERFAHREN EINER SCHLAUCHROLLENEINHEIT
UNITÉ ENROULEUR DE TUYAU ET PROCÉDÉ D'UNITÉ ENROULEUR DE TUYAU

(30) Priority: 30.06.2020 SE 2050797
(43) Date of publication of application: 05.01.2022
(73) Proprietor: GDS Geo Drilling Solutions AB, 132 38 Saltsjö-Bo (SE)
(72) Inventor: AHLUND, Rasmus, 171 70 Solna (SE); HANSSON, Pär, 805 96 Gävle (SE); HANSSON, Robert, 132 39 Saltsjö-Boo (SE)
(74) Representative: Groth & Co. KB

(56) References cited:
- JP-A- H07 207 941
- JP-A- H09 273 669
- JP-A- S57 201 424
- JP-B2- 5 461 135
- US-A1- 2005 189 170
- US-B2- 9 951 535

## Description

### BACKGROUND OF THE INVENTION AND PRIOR ART

The present disclosure relates to handling of abrasive materials and particularly the present disclosure relates to distribution of concrete for filling of a delimited object such as a pole.

In some situations during constructing of a delimited object, concrete needs to be delivered to locations that are difficult to access and that can be located at a significant distance from a concrete pump.

Historically, efforts have been made to develop technologies facilitating distribution of concrete to locations that are difficult to access. One alternative is to use wheelbarrows. Another alternative is using a telescopic boom mounted on a truck.

US6220292B1 is an example where a crane-mounted concrete pumper is described.

According to the document, a hose reel assembly and a telescoping boom assembly is pivotally and rotatably mounted on a platform of a truck. Thereby, concrete can be distributed to a form placed behind a building via a hose extending along the boom. The boom in the US6220292B1 can be used as a crane.

One drawback with the pumper in the US6220292B1 or in the US9951535 B2 is that it may be difficult for the truck to operate on a building area with limited access for trucks.

Thus, it is desirable to provide an improved hose reel unit that is easy to move between different locations within a building area. Further, it is desirable to provide a hose reel unit that facilitates positioning of an end portion of a hose of the hose reel unit in relation to a material transported via the hose.

### SUMMARY OF THE INVENTION

One object of the present disclosure is to provide an improved hose reel unit that facilitates positioning of an end portion of a hose of the hose reel unit in relation to a material transported via the hose.

The object is achieved by the hose reel unit defined in claim 1.

Thus, the object is achieved by a hose reel unit comprising:
- a hose adapted for transport of an abrasive material,
- a hose reel rotatably mounted on a frame,
- a drive unit arranged to rotate the hose reel for winding of the hose from and on the hose reel, and
- a control unit arranged to control the drive unit.

With abrasive material is meant herein a material that may cause wearing of the inner surface of the hose due to friction between the material and the inner surface of the hose during transport of the material via the hose. Thus, the hose is adapted for transport of a material that, for example, may comprise sand or stones.

The hose reel unit further comprises:
- a volume measuring device arranged to measure a volume of the abrasive material being transported via the hose, and
- a hose length measuring device arranged to measure a length of the hose being wound down or up from or on the hose reel.

In the hose reel unit, the control unit is arranged to control the drive unit based on an information about the volume of the abrasive material being transported via the hose and based on an information about the length of the hose being wound down or wound up in order to control a position of an end portion of the hose in relation to the volume of the abrasive material being transported via the hose.

The abrasive material is transported through the hose and out from the hose.

Because the position of the end portion of the hose in relation to the volume of the abrasive material being transported via the hose can be controlled by measuring the volume of the abrasive material being transported via the hose and by measuring the length of the hose that has been wound down from the hose reel or that has been wound up on the hose reel, there is no need of any additional sensing or measuring devices for determining the position of the end portion of the hose.

Thus, there is no need of any sensors or other measuring devices arranged at the end portion of the hose for providing an information about the position of the end portion of the hose in relation to the volume of the abrasive material being transported via the hose. A sensor or an another measuring device arranged at the end portion of the hose can be clogged or can be damaged due to a contact with the abrasive material.

Thus, a robust hose reel unit is provided, that enables controlling of the position of the end portion of the hose, in relation to the volume of the abrasive material being transported via the hose in a simple and reliable manner.

As a result the above mentioned object is achieved.

According to an embodiment, the hose comprises a valve arranged at an end of the hose, wherein the valve is arranged to enclose the abrasive material within the hose. The valve may be an air-operated valve. Thus, the hose can be filled with the abrasive material then the valve can be closed to enable positioning of the hose, filled with the abrasive material, within a delimited object. Further, the valve can be opened to enable filling of the delimited object with the abrasive material transported via the hose.

According to an embodiment, the control unit is arranged to receive an information about the diameter and the total length of the hose. By knowing the diameter and the total length of the hose it is easy to calculate an inner volume of the hose. The inner volume of the hose corresponds to a volume of the abrasive material that is needed to fill up the hose. Thus, by measuring the volume of the abrasive material being transported via the hose it is known when the abrasive material fills up the hose, and when the abrasive material reaches the end of the hose. Before the abrasive material reaches the end of the hose the end portion of the hose may be kept at an initial position of the end portion of the hose.

The hose, that has been wound down from the hose reel, can be positioned in the delimited object intended to be filled up with the abrasive material. Thus, the abrasive material transported via the hose may firstly fill up the hose and after that may flow out from an end of hose into the delimited object to fill up the delimited object with the abrasive material.

The delimited object may be a pole. The control unit is also arranged to receive an information about the dimensions of the delimited object. The dimensions of the delimited object, such as a diameter of a pole can be entered into the control unit.

A pole has a bottom portion that usually is attached to a bedrock when the pole has been installed in the ground. The bottom portion may comprise a volume of a sediment. The length of the pole measured from an upper surface of the sediment in the pole may be measured by using the hose that can be wound down inside the pole until it reaches the upper surface of the sediment in the pole. Thus, it is easy to determinate when the end portion of the hose reaches the sediment.

Alternatively, the length of the pole measured from an upper surface of the sediment in the pole may be known from a drilling protocol of the pole. Thus, the end portion of the hose can be positioned within the pole based on an information from the drilling protocol of the pole.

Consequently, by knowing the volume of the abrasive material transported via the hose and by knowing the dimensions of the delimited object it is easy to calculate the height above the upper surface of the sediment, that an upper surface of the abrasive material will reach inside the delimited object while being transported into the delimited object via the hose. This, together with the information about the length of the hose being wound down give an information about the position of the end portion of the hose in relation to the volume of the abrasive material being transported via the hose into the delimited object.

A correct positioning of the end portion of the hose in relation to the upper surface of the abrasive material being transported into the delimited object is important in order to avoid mixing of the abrasive material with, for example air or water. Thus, the end portion of the hose should be kept submerged within the volume of the abrasive material such that an end of the hose is kept at a predetermined distance from said upper surface of the abrasive material that has been transported into the delimited obj ect.

As a result, the position of the end portion of the hose can be controlled, to be kept submerged within the volume of the abrasive material while transporting the abrasive material into the delimited object, by controlling the drive unit based on the information about the volume of the abrasive material being transported via the hose and based on the information about the length of the hose being wound down.

The hose reel unit can also be used for removing of an abrasive material from a delimited object. The abrasive material may be a sediment in a pole installed in the ground. Thus, the position of the end portion of the hose can be controlled in relation to the volume of the abrasive material in the delimited object by measuring the volume of the abrasive being transported via the hose out from the delimited object and by controlling the length of the hose being wound down and later wound up on the hose reel.

According to an embodiment, the volume measuring device is comprised by a pump arranged for pumping the abrasive material into the hose. Thus, the pump, and especially the stroke of the pump, can be used for measuring the volume of abrasive material pumped into the hose for further transport of the abrasive material via the hose. Thereby, the volume of the abrasive material can be measured in a simple and reliable manner.

According to an embodiment, the hose length measuring device comprises a hose sub-reel connected to the frame. Thereby, the length of the hose being wound down or up can be measured in a simple manner by means of the hose sub-reel.

According to an embodiment, the frame is a mobile frame. Thus, a mobile hose reel unit is achieved, which hose reel unit can be moved between different positions.

According to an embodiment, the frame comprises an attachment portion for attachment of the frame to a mobile machine, such as an excavator. Thus, the hose reel unit can be attached to the mobile machine and can be moved between different positions by means of the mobile machine.

According to an embodiment, the drive unit comprises a hydraulic motor. A hydraulic motor is characterized by robustness and reliability. Thus, thanks to the hydraulic motor, the hose reel can be driven, i.e. can be rotated in a simple and reliable manner.

According to an embodiment, the abrasive material is an unsolidified concrete. Thus, the hose reel unit can be used for casting of concrete, such as filling a pole with concrete.

According to an embodiment, at least some of the control unit, the drive unit, the volume measuring device and the hose length measurement device are arranged to communicate with each other in a wireless manner. Thus, no wires between at least some of the control unit, the drive unit, the volume measuring device and the hose length measurement device are needed for transmission of information.

According to an embodiment, the hose has a strength enabling to fill at least 20 m of the hose with the abrasive material in a hanging and a substantially vertical position of the hose. The abrasive material filled in the hose, positioned in a hanging and a substantially vertical position, causes traction forces acting on the hose due to the weight of the abrasive material in the hose and due to the weight of the hose. Thus, the hose is constructed such that the traction forces acting on the hose when at least 20 m of the hose has been filed with the abrasive material will not cause pulling apart of the hose in in a hanging and a substantially vertical position of the hose.

Another object of the present disclosure is to provide an improved method of a hose reel unit that facilitates positioning of an end portion of a hose of the hose unit in relation to a material transported via the hose.

The object is achieved by a method of a hose reel unit as defined in claim 10.

Thus, the object is achieved by a method of a hose reel unit, wherein the hose reel unit comprises:
- a hose adapted for transport of an abrasive material,
- a hose reel rotatably mounted on a frame ,
- a drive unit arranged to rotate the hose reel for winding of the hose from and on the hose reel,
- a control unit arranged to control the drive unit,
- a volume measuring device arranged to measure the volume of the abrasive material being transported via the hose and
- a hose length measuring device arranged to measure the length of the hose being wound down or up from or on the hose reel.

The method comprises:
- obtaining, from the volume measuring device, a value of the volume of the abrasive material being transported via the hose,
- obtaining, from the hose length measuring device, a value of the length of the hose being wound down or up, and
- controlling the drive unit based on said obtained value of the volume of the abrasive material being transported via the hose and based on the obtained value of the length of the hose being wound down or wound up, in order to control a position of an end portion of the hose in relation to the abrasive material being transported via the hose .

With abrasive material is meant herein a material that may cause wearing of the inner surface of the hose due to friction between the material and the inner surface of the hose during transport of the material via the hose. Thus, the hose is adapted for transport of a material that, for example, may comprise sand or stones.

The abrasive material is transported through the hose and out from the hose.

Because the position of the end portion of the hose in relation to the volume of the abrasive material being transported via the hose can be controlled by measuring the volume of the abrasive material being transported via the hose and by measuring the length of the hose that has been wound down from the hose reel or that has been wound up on the hose reel, there is no need of any additional sensing or measuring devices for determining the position of the end portion of the hose.

Thus, there is no need of any sensors or other measuring devices arranged at the end portion of the hose for providing an information about the position of the end portion of the hose in relation to the volume of the abrasive material being transported via the hose. A sensor or an another measuring device arranged at the end portion of the hose can be clogged or can be damaged due to contact with the abrasive material.

Thus, an improved method of a hose reel unit is provided, enabling controlling of the position of the end portion of the hose, in relation to the volume of the abrasive material being transported via the hose in a simple and reliable manner.

As a result, the above mentioned object is achieved.

According to an embodiment, the method comprises:
- filling the hose with the abrasive material being transported via the hose,
- closing a valve arranged at an end of the hose for enclosing of the abrasive material within the hose,
- positioning the hose within a delimited object intended to be filled with the abrasive material and
- opening the valve arranged at the end of the hose for supplying of the abrasive material into the delimited object to be filled with the abrasive material.

When implementing the method, dimensions of the delimited object, such as a diameter and a length, can be entered into the control unit in order to calculate the volume of the delimited object intended to be filled with the abrasive material. At least some dimensions of the delimited object intended to be filled with the abrasive material are used to enable controlling of the position of the end portion of the hose, in relation to the volume of the abrasive material being transported via the hose in a simple and reliable manner.

According to an embodiment, the method comprises:
- providing a diameter of the hose and the total length of the hose.

By knowing the diameter and the total length of the hose it is easy to calculate an inner volume of the hose. The inner volume of the hose corresponds to a volume of the abrasive material that is needed to fill up the hose. Thus, by measuring the volume of the abrasive material being transported via the hose it is known when the abrasive material fills up the hose, and when the abrasive material reaches the end of the hose.

The hose that has been wound down from the hose reel may be positioned in a delimited object intended to be filled up with the abrasive material. Thus, the abrasive material transported via the hose may firstly fill up the hose and after that may flow out from the end of hose into the delimited object to fill up the delimited object with the abrasive material.

The dimensions of the delimited object, such as a diameter, can be entered into the control unit.

A delimited object has a bottom portion that may be attached to a bedrock when the delimited object has been installed in the ground. The bottom portion of the delimited object may comprise a volume of a sediment. The length of the delimited object from an upper surface of the sediment in the delimited object may be measured by using the hose that can be wound down inside the delimited object until it reaches the upper surface of the sediment in the delimited object. Thus, it is easy to determinate when the end portion of the hose reaches the sediment.

Alternatively, the length of the delimited object measured from the upper surface of the sediment in the delimited object may be known from a drilling protocol of the delimited object. Thus, the end portion of the hose can be positioned within the delimited object based on an information from the drilling protocol of the pole.

Consequently, by knowing the volume of the abrasive material transported via the hose and by knowing the dimensions of the delimited object it is easy to calculate the height above the upper surface of the sediment, that an upper surface of the abrasive material will reach inside the delimited object while being transported into the delimited object via the hose. This, together with the information about the length of the hose being wound down give an information about the position of the end portion of the hose in relation to the volume of the abrasive material being transported via the hose into the delimited object.

A correct positioning of the end portion of the hose in relation to the upper surface of the abrasive material being transported into the delimited object is important in order to avoid mixing of the abrasive material with, for example air or water. Thus, the end portion of the hose should be kept submerged within the volume of the abrasive material such that an end of the hose is kept at a predetermined distance from said upper surface of the volume of the abrasive material that has been transported into the delimited object.

As a result, the position of the end portion of the hose can be controlled, to be kept submerged within the volume of the abrasive material while transporting the abrasive material into the delimited object, by controlling the drive unit based on the information about the volume of the abrasive material being transported via the hose and based on the information about the length of the hose being wound down.

The method of a hose reel unit can also be used for removing of an abrasive material from the delimited object. The abrasive material may be a sediment in a pole installed in the ground. Thus, the position of the end portion of the hose can be controlled in relation to the volume of the abrasive material in the delimited object by measuring the volume of the abrasive being transported via the hose out from the delimited object and by controlling the length of the hose being wound down and later wound up on the hose reel.

According to an embodiment, the delimited object is a pole.

According to an embodiment, the method comprises:
- attaching the hose reel unit to a mobile machine, such as an excavator and
- positioning the hose reel unit at a working position by means of the mobile machine. Thus, the hose reel unit can be moved between different positions by means of the mobile machine.

According to an embodiment the drive unit comprises a hydraulic motor. Thereby, the hose reel can be driven, i.e. can be rotated by means of the hydraulic motor. A hydraulic motor is characterized by robustness and reliability. Thus, thanks to the hydraulic motor, the hose reel can be driven in a simple and reliable manner.

According to an embodiment the abrasive material is an unsolidified concrete. Thus, the method can be used for when casting of concrete, such as filling a pole with concrete.

### BRIEF DESCRIPTION OF THE DRAWINGS

In the following preferred embodiments of the invention are described with reference to the attached drawings, on which:
Fig. 1 is a first perspective view of a hose reel unit,
Fig. 2 is a second perspective view of the hose reel unit in Fig. 1 and
Fig. 3 shows the hose reel unit in Fig. 1 and 2 positioned in a working position at a pole.

### DETAILLED DESCRIPTION OF PREFERRED EMBODIMENTS OF THE INVENTION

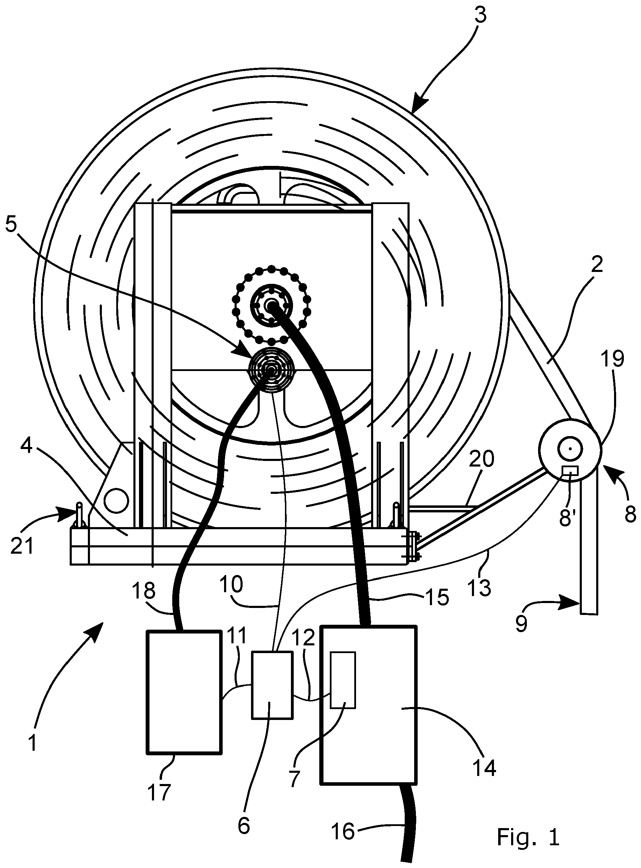

Fig. 1 illustrates hose reel unit 1 comprising:
- a hose 2 adapted for transport of an abrasive material,
- a hose reel 3 rotatably mounted on a frame 4 and arranged to rotate around a rotational axis x,
- a drive unit 5 arranged to rotate the hose reel 3 for winding of the hose 2 from and on the hose reel 3, and
- a control unit 6 arranged to control the drive unit 5,

The hose reel unit 1 further comprises:
- a volume measuring device 7arranged to measure a volume of the abrasive material being transported via the hose 2, and
- a hose length measuring device 8 arranged to measure a length of the hose 2 being wound down or up from or on the hose reel 3,

The control unit 6 is arranged to control the drive unit 5 based on an information about the volume of the abrasive material being transported via the hose 2 and based on an information about the length of the hose 2 being wound down or wound up in order to control a position of an end portion 9 of the hose 2 in relation to the volume of the abrasive material being transported via the hose 2.

The hose 2 has a strength enabling to fill at least 20 m of the hose 2 with the abrasive material in a hanging and a substantially vertical position of the hose 2. Such a strength is achieved by reinforcement of the hose 2 with, for example, four layers of steel chords which makes the hose 2 stiffer and able to withstand higher tension forces acting on the hose 2 during use.

The hose 2 may comprises a valve arranged at an end 9' of the end portion 9 of the hose 2, wherein the valve is arranged to enclose the abrasive material within the hose 2. The valve may be an air-operated valve. Thus, the hose 2 can be filled with the abrasive material, then the valve can be closed to enable positioning of the hose 2, filled with the abrasive material, within a delimited object. Further, the valve can be opened to enable filling of the delimited object with the abrasive material transported via the hose 2.

As illustrated in Fig. 1, the control unit 6 is connected to the driving 5 unit via a first connection line 10. The control unit 6 is connected to the volume measuring device 7 via a second connection line 12 and the control unit 4 is connected to the length measuring device 8 via a third connection line 13.

The first connection line 10, the second connection line 12 are arranged for transmitting information to and from the control unit 6.

According to some embodiments, at least some of the control unit 6, the drive unit 5 , the volume measuring device? and the hose length measurement device 8 are arranged to communicate with each other in a wireless manner.

The volume measuring device 7 may be comprised by a pump 14 arranged for pumping of the abrasive material into the hose 2.. Thus, the pump 14, and especially the stroke of the pump, can be used for measuring the volume of abrasive material pumped into the hose 2. Thus, by measuring the number of working operations of the pump 14 and knowing the stroke of the pump 14 it is easy to calculate the volume of the abrasive material being pumped by the pump 14. Thereby, the volume of the abrasive material can be measured in a simple and reliable manner.

The pump 14 is connected to the hose 2 at the hose reel 3 via a connection hose 15. Further, the pump 14 is connected to a source of the abrasive material (not shown) via a material hose 16.

According to an embodiment, the drive unit 5 comprises a hydraulic motor 5. The hydraulic motor 5 is driven by oil from a hydraulic system 17 connected to the hydraulic motor 5 via an oil hose 18. In a common manner, the hydraulic system 17 comprises an oil pump (not shown) for pumping the oil into the hydraulic motor 5.

When a hydraulic motor is used the control unit 6 is connected to a hydraulic system 17 via a fourth connection 11. The hydraulic system 17 is known in the art and therefore is not described in details herein.

The principle of the control unit 6, is that it calculates and regulates the speed of the drive unit 5 by using information about the volume of a delimited object to be filed with the abrasive material, a volume of the abrasive material being transported via the hose 2 and the length of hose 2 that has been wound down or wound up.

After some calculation operations, the control unit 6 is arranged to send an analog signal (2,5-7,5V) to a proportional hydraulic valve comprised in the hydraulic system 17, that adjusts the amount of hydraulic oil being delivered to the drive unit. Thereby, adjusting the speed of the drive unit 5 so that the end portion 9 of the hose 2 is at a predefined depth in the concrete during use.

The hose length measuring device 8 may comprise a sensor 8' arranged in vicinity of the hose 2. As illustrated in Fig. 1, the hose length measuring device 8 comprises a hose sub-reel 19 connected to the frame 4 via a support delimited object 20. The sensor 8' is arranged on the hose sub-reel 19 and is used for measuring the length of the hose 2 during rotation of the hose sub-reel 19. The sensor 8' may be an inductive positioning sensor.

As illustrated in Fig. 1, the frame 4 comprises a lifting means 21 for lifting of the hose reel unit 1 by means of, for example a crane. The lifting means 21 may be arranged as four oval members attached to the frame 4 and arranged to be connected to a wire or a chain for lifting of the hose reel unit 1.

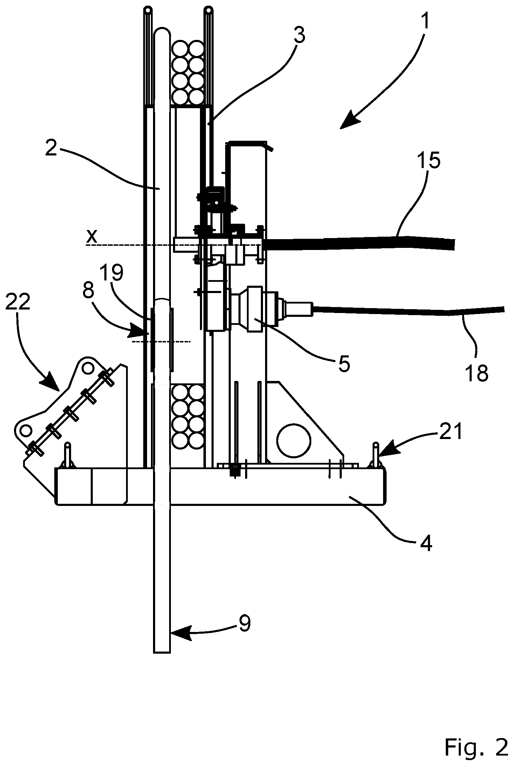

Fig. 2 illustrates the hose reel unit 1 in Fig. 1 in a 90° angle view comparing to the view in Fig. 1.

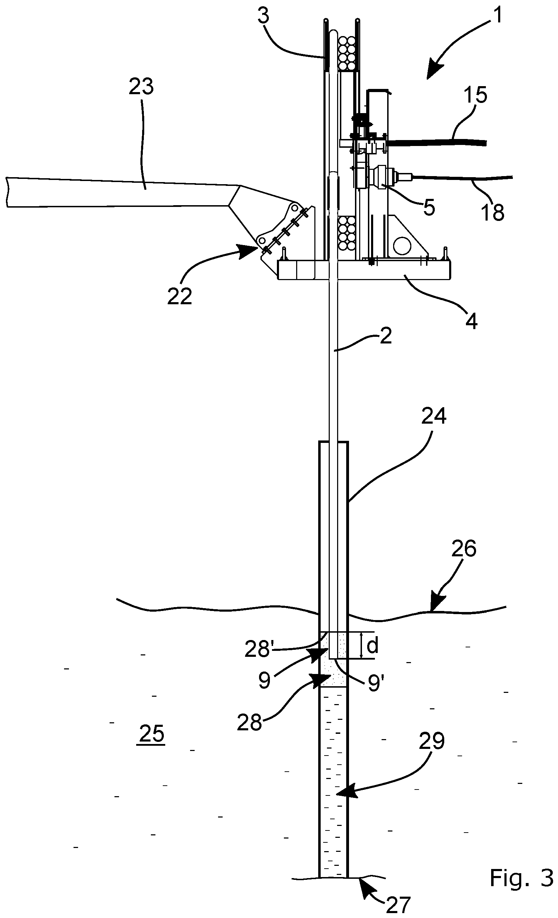

As can be seen, the frame 4 comprises an attachment portion 22 for attachment of the frame 4 to a mobile machine, such as an excavator. A part of an arm 23 of an excavator is illustrated in Fig. 3. Thus, the hose reel unit 1 can be attached to the mobile machine and can be moved between different positions within an working area by means of the mobile machine.

Fig. 3 shows the hose reel unit in Fig. 1 and in Fig. 2 positioned in a working position at a delimited object, which may be a pole 24.

As illustrated in Fig. 3, the hose reel unit 1 has been attached, through the attachment portion 22, to a mobile machine, such as an excavator comprising an arm 23. Further, the hose reel unit 1 has been positioned at a working position above the pole 24 by means of the arm 23 of the excavator.

A pole 24 has been installed in the ground with a ground surface 26. The ground surface 26 may be a bottom of a lake or sea. Thus, the pole 24 has a portion extending above the surface 26 and a portion extending below the surface 26. The portion of the pole 24 extending below the surface 26 may comprise a volume of a sediment 29 of the lake or the sea. A bottom portion of the pole 24 is usually attached or may rest on a rock with an upper surface 27.

In the working position of the hose reel unit 1 at the pole 24 the hose 2 is wound down inside the pole until the hose 2 reaches the upper surface of the sediment 29 in the pole 24. Then, the hose 2 is wound up a predetermined length of the hose 2 to enable transport of the abrasive material 28, out from the hose 2 into the pole 24.

As illustrated in Fig. 3, the abrasive material 28 has been delivered to a bottom portion of the pole 24 to an upper surface of the sediment 29 inside the pole 24 via the end portion of the hose 9.

When filling the pole 24 with the abrasive material 28 it is important to control the position of the end portion 9 of the hose 2 in relation to the abrasive material transported into the pole 24. A correct positioning of the end portion 9 of the hose 2 in relation to the upper surface 28' of the abrasive material being transported into the pole 24 is important in order to avoid mixing of the abrasive material 28 with, for example air or water. Thus, the end portion 9 of the hose 2 should be kept submerged within the volume of the abrasive material 28 such that an end 9'of the hose 2 is kept at a predetermined distance d from said upper surface 28' of the abrasive material 28 that has been transported into the pole 24 to fill up the pole 24. The predetermined distance d is between 1m and 2m.

The hose 2 may comprises a valve arranged at the end 9' of the end portion 9 of the hose 2, wherein the valve is arranged to enclose the abrasive material within the hose 2. The valve may be an air-operated valve. Thus, the hose 2 can be filled with the abrasive material, then the valve can be closed to enable positioning of the hose 2, filled with the abrasive material, within the pole 24. Further, the valve can be opened to enable filling of the pole 24 with the abrasive material transported via the hose 2.

The invention is not restricted to the described embodiment but may be varied freely at the scope of the claims.

As used herein, the term "comprising" or "comprises" is open-ended, and includes one or more stated features, elements, steps, components or functions but does not preclude the presence or addition of one or more other features, elements, steps, components, functions, or groups thereof.

## Claims

1. A hose reel unit (1) comprising:
- a hose (2) adapted for transport of an abrasive material,
- a hose reel (3) rotatably mounted on a frame (4),
- a drive unit (5) arranged to rotate the hose reel (3) for winding of the hose (2) from and on the hose reel (3), and
- a control unit (6) arranged to control the drive unit (5),
**characterised in that** said hose reel unit (1) further comprises:
- a volume measuring device (7) arranged to measure a volume of the abrasive material being transported via the hose (2), and
- a hose length measuring device (8) arranged to measure a length of the hose (2) being wound down or up from or on the hose reel (3),
wherein said control unit (6) is arranged to control the drive unit (5) based on an information about the volume of the abrasive material being transported via the hose (2) and based on an information about the length of the hose being wound down or wound up in order to control a position of an end portion (9) of the hose (2) in relation to the volume of the abrasive material being transported via the hose (2).

2. The hose reel unit (1) according to claim 1, wherein the volume measuring device (7) is comprised by a pump (14) arranged for pumping the abrasive material into the hose (2).

3. The hose reel unit (1) according to claims 1 or 2, wherein the hose length measuring device (8) comprises a hose sub-reel (19) connected to the frame (4).

4. The hose reel unit (1) according to any of claims 1 to 3, wherein the frame (4) is a mobile frame.

5. The hose reel unit (1) according to claim 4, wherein the frame (4) comprises an attachment portion (22) for attachment of the frame (4) to a mobile machine, such as an excavator.

6. The hose reel unit (1) according to any of claims 1 to 5, wherein the drive unit (5) comprises a hydraulic motor.

7. The hose reel unit (1) according to any of claims 1 to 6, wherein the abrasive material is an unsolidified concrete.

8. The hose reel unit (1) according to any of claims 1 to 7, wherein at least some of the control unit (6), the drive unit (5), the volume measuring device (7) and the hose length measurement device (8) are arranged to communicate with each other in a wireless manner.

9. The hose reel unit (1) according to any of claims 1 to 8, wherein the hose (2) has a strength enabling to fill at least 20 m of the hose (2) with the abrasive material in a hanging and a substantially vertical position of the hose (2).

10. A method of a hose reel unit (1), the hose reel unit (1) comprising:
- a hose (2) adapted for transport of an abrasive material,
- a hose reel (3) rotatably mounted on a frame (4),
- a drive unit (5) arranged to rotate the hose reel (3) for winding of the hose (2) from and on the hose reel (3),
- a control unit (6) arranged to control the drive unit (5),
- a volume measuring device (7) arranged to measure the volume of the abrasive material being transported via the hose (2) and
- a hose length measuring device (8) arranged to measure the length of the hose (2) being wound down or up from or on the hose reel (3),
**characterised in that** the method comprises:
- obtaining, from the volume measuring device (7), a value of the volume of the abrasive material being transported via the hose (2),
- obtaining, from the hose length measuring device (8), a value of the length of the hose (2) being wound down or up, and
- controlling the drive unit (5) based on said obtained value of the volume of the abrasive material being transported via the hose (2) and based on said obtained value of the length of the hose being wound down or wound up, in order to control a position of an end portion (9) of the hose (2) in relation to the abrasive material being transported via the hose (2).

11. The method according to claim 10, comprising:
- filling the hose (2) with the abrasive material being transported via the hose (2),
- closing a valve arranged at an end (9') of the hose (2) for enclosing of the abrasive material within the hose (2),
- positioning the hose (2) within a delimited object (24) intended to be filled with the abrasive material and
- opening said valve arranged at the end (9') of the hose (2) for supplying of the abrasive material into the delimited object (24) to be filled with the abrasive material.

12. The method according to claim 11, wherein the delimited object (24) is a pole.

13. The method according to any of claims 10 to 12, comprising:
- attaching the hose reel unit (1) to a mobile machine, such as an excavator and
- positioning the hose reel unit (1) at a working position by means of the mobile machine.

14. The method according to any of claims 10 to 13, wherein the drive unit (5) comprises a hydraulic motor.

15. The method according to any of claims 10 to 14, wherein the abrasive material is an unsolidified concrete.

## Patentansprüche

1. Schlauchrolleneinheit (1), umfassend:
- einen Schlauch (2), der zum Transport eines Schleifmaterials eingerichtet ist,
- eine auf einem Gestell (4) drehbar gelagerte Schlauchrolle (3),
- eine Antriebseinheit (5), die zum Drehen der Schlauchrolle (3) ausgelegt ist, um den Schlauch (2) von der Schlauchrolle (3) ab-und auf diese aufzuwickeln, und
- eine Steuereinheit (6), die zum Steuern der Antriebseinheit (5) ausgelegt ist,
**dadurch gekennzeichnet, dass** die Schlauchrolleneinheit (1) ferner umfasst:
- eine Volumenmessvorrichtung (7), die dazu ausgelegt ist, ein Volumen des über den Schlauch (2) transportierten Schleifmaterials zu messen, und
- eine Schlauchlängenmessvorrichtung (8), die dazu ausgelegt ist, eine Länge des Schlauchs (2) zu messen, der auf die Schlauchrolle (3) auf- oder davon abgewickelt wird,
wobei die Steuereinheit (6) dazu ausgelegt ist, die Antriebseinheit (5) basierend auf einer Information über das Volumen des Schleifmaterials, das über den Schlauch (2) transportiert wird, und basierend auf einer Information über die Länge des Schlauchs, der abgewickelt oder aufgewickelt wird, zu steuern, um eine Position eines Endabschnitts (9) des Schlauchs (2) in Bezug auf das Volumen des Schleifmaterials, das über den Schlauch (2) transportiert wird, zu steuern.

2. Schlauchrolleneinheit (1) nach Anspruch 1, wobei die Volumenmessvorrichtung (7) durch eine Pumpe (14) ausgebildet ist, die zum Pumpen des Schleifmaterials in den Schlauch (2) ausgelegt ist.

3. Schlauchrolleneinheit (1) nach Anspruch 1 oder 2, wobei die Schlauchlängenmessvorrichtung (8) eine mit dem Rahmen (4) verbundene Schlauchunterrolle (19) umfasst.

4. Schlauchrolleneinheit (1) nach einem der Ansprüche 1 bis 3, wobei der Rahmen (4) ein mobiler Rahmen ist.

5. Schlauchrolleneinheit (1) nach Anspruch 4, wobei der Rahmen (4) einen Befestigungsabschnitt (22) zum Befestigen des Rahmens (4) an einer mobilen Maschine wie etwa einem Bagger umfasst.

6. Schlauchrolleneinheit (1) nach einem der Ansprüche 1 bis 5, wobei die Antriebseinheit (5) einen Hydraulikmotor umfasst.

7. Schlauchrolleneinheit (1) nach einem der Ansprüche 1 bis 6, wobei das Schleifmaterial ein unverfestigter Beton ist.

8. Schlauchrolleneinheit (1) nach einem der Ansprüche 1 bis 7, wobei mindestens einige von der Steuereinheit (6), der Antriebseinheit (5), der Volumenmessvorrichtung (7) und der Schlauchlängenmessvorrichtung (8) dazu ausgelegt sind, drahtlos miteinander zu kommunizieren.

9. Schlauchrolleneinheit (1) nach einem der Ansprüche 1 bis 8, wobei der Schlauch (2) eine Festigkeit aufweist, die es ermöglicht, mindestens 20 m des Schlauchs (2) in einer hängenden und einer im Wesentlichen vertikalen Stellung des Schlauchs (2) mit dem Schleifmaterial zu füllen.

10. Verfahren für eine Schlauchrolleneinheit (1), wobei die Schlauchrolleneinheit (1) umfasst:
- einen Schlauch (2), der zum Transport eines Schleifmaterials eingerichtet ist,
- eine auf einem Gestell (4) drehbar gelagerte Schlauchrolle (3),
- eine Antriebseinheit (5), die zum Drehen der Schlauchrolle (3) ausgelegt ist, um den Schlauch (2) von der Schlauchrolle (3) ab- und auf diese aufzuwickeln,
- eine Steuereinheit (6), die zum Steuern der Antriebseinheit (5) ausgelegt ist,
- eine Volumenmessvorrichtung (7), die dazu ausgelegt ist, das Volumen des über den Schlauch (2) transportierten Schleifmaterials zu messen, und
- eine Schlauchlängenmessvorrichtung (8), die dazu ausgelegt ist, die Länge des Schlauchs (2) zu messen, der auf die Schlauchrolle (3) auf- oder davon abgewickelt wird,
**dadurch gekennzeichnet, dass** das Verfahren umfasst:
- Erlangen eines Werts des Volumens des über den Schlauch (2) transportierten Schleifmaterials von der Volumenmessvorrichtung (7),
- Erlangen eines Werts der Länge des abgewickelten oder aufgewickelten Schlauchs (2) von der Schlauchlängenmessvorrichtung (8) und
- Steuern der Antriebseinheit (5) basierend auf dem erlangten Wert des Volumens des über den Schlauch (2) transportierten Schleifmaterials und basierend auf dem erhaltenen Wert der Länge des abgewickelten oder aufgewickelten Schlauchs, um eine Position eines Endabschnitts (9) des Schlauchs (2) in Bezug auf das über den Schlauch (2) transportierte Schleifmaterial zu steuern.

11. Verfahren nach Anspruch 10, ferner umfassend:
- Füllen des Schlauchs (2) mit dem über den Schlauch (2) transportierten Schleifmaterial,
- Schließen eines an einem Ende (9') des Schlauchs (2) angeordneten Ventils zum Einschließen des Schleifmaterials innerhalb des Schlauchs (2),
- Anordnen des Schlauchs (2) innerhalb eines begrenzten Objekts (24), das dazu vorgesehen ist, mit dem Schleifmaterial gefüllt zu werden, und
- Öffnen des an dem Ende (9') des Schlauchs (2) angeordneten Ventils zum Zuführen des Schleifmaterials in das begrenzte, mit dem Schleifmittel zu füllende Objekt (24).

12. Verfahren nach Anspruch 11, wobei das begrenzte Objekt (24) ein Pfosten ist.

13. Verfahren nach einem der Ansprüche 10 bis 12, ferner umfassend:
- Befestigen der Schlauchrolleneinheit (1) an einer mobilen Maschine wie etwa einem Bagger und
- Positionieren der Schlauchrolleneinheit (1) an einer Arbeitsposition mittels der mobilen Maschine.

14. Verfahren nach einem der Ansprüche 10 bis 13, wobei die Antriebseinheit (5) einen Hydraulikmotor umfasst.

15. Verfahren nach einem der Ansprüche 10 bis 14, wobei das Schleifmaterial ein unverfestigter Beton ist.

## Revendications

1. Unité enrouleur de tuyau (1) comprenant :
- un tuyau (2) conçu pour le transport d'un matériau abrasif,
- un enrouleur de tuyau (3) monté rotatif sur un cadre (4),
- une unité d'entraînement (5) agencée pour faire tourner l'enrouleur de tuyau (3) pour l'enroulement du tuyau (2) depuis et sur l'enrouleur de tuyau (3), et
- une unité de commande (6) agencée pour commander l'unité d'entraînement (5),
**caractérisé en ce que** ladite unité enrouleur de tuyau (1) comprend également :
- un dispositif de mesure de volume (7) agencé pour mesurer un volume du matériau abrasif transporté par l'intermédiaire du tuyau (2), et
- un dispositif de mesure de longueur de tuyau (8) agencé pour mesurer une longueur du tuyau (2) enroulé vers le bas ou vers le haut depuis ou sur l'enrouleur de tuyau (3),
dans laquelle ladite unité de commande (6) est agencée pour commander l'unité d'entraînement (5) sur la base d'une information concernant le volume du matériau abrasif transporté par l'intermédiaire du tuyau (2) et sur la base d'une information concernant la longueur du tuyau enroulé vers le bas ou enroulé vers le haut afin de commander une position d'une partie d'extrémité (9) du tuyau (2) par rapport au volume de matériau abrasif transporté par l'intermédiaire du tuyau (2).

2. Unité enrouleur de tuyau (1) selon la revendication 1, dans laquelle le dispositif de mesure de volume (7) est constitué d'une pompe (14) agencée pour pomper le matériau abrasif dans le tuyau (2).

3. Unité enrouleur de tuyau (1) selon les revendications 1 ou 2, dans laquelle le dispositif de mesure de longueur de tuyau (8) comprend un sous-enrouleur de tuyau (19) connecté au cadre (4) .

4. Unité enrouleur de tuyau (1) selon l'une quelconque des revendications 1 à 3, dans laquelle le cadre (4) est un cadre mobile.

5. Unité enrouleur de tuyau (1) selon la revendication 4, dans laquelle le cadre (4) comporte une partie de fixation (22) pour la fixation du cadre (4) à une machine mobile, telle qu'une excavatrice.

6. Unité enrouleur de tuyau (1) selon l'une quelconque des revendications 1 à 5, dans laquelle l'unité d'entraînement (5) comprend un moteur hydraulique.

7. Unité enrouleur de tuyau (1) selon l'une quelconque des revendications 1 à 6, dans laquelle le matériau abrasif est un béton non solidifié.

8. Unité enrouleur de tuyau (1) selon l'une quelconque des revendications 1 à 7, dans laquelle certains parmi l'unité de commande (6), l'unité d'entraînement (5), le dispositif de mesure de volume (7) et le dispositif de mesure de longueur de tuyau (8) sont agencés pour communiquer les uns avec les autres de manière sans fil.

9. Unité enrouleur de tuyau (1) selon l'une quelconque des revendications 1 à 8, dans laquelle le tuyau (2) a une résistance permettant de remplir au moins 20 m du tuyau (2) avec le matériau abrasif dans une suspension et une position sensiblement verticale du tuyau (2).

10. Procédé d'une unité enrouleur de tuyau (1), l'unité enrouleur de tuyau (1) comprenant :
- un tuyau (2) conçu pour le transport d'un matériau abrasif,
- un enrouleur de tuyau (3) monté rotatif sur un cadre (4),
- une unité d'entraînement (5) agencée pour faire tourner l'enrouleur de tuyau (3) pour l'enroulement du tuyau (2) depuis et sur l'enrouleur de tuyau (3),
- une unité de commande (6) agencée pour commander l'unité d'entraînement (5),
- un dispositif de mesure de volume (7) agencé pour mesurer le volume du matériau abrasif transporté par l'intermédiaire du tuyau (2) et
- un dispositif de mesure de longueur de tuyau (8) agencé pour mesurer la longueur du tuyau (2) enroulé vers le bas ou vers le haut depuis ou sur l'enrouleur de tuyau (3),
**caractérisé en ce que** le procédé comprend :
- l'obtention, à partir du dispositif de mesure de volume (7), d'une valeur du volume du matériau abrasif transporté par l'intermédiaire du tuyau (2),
- l'obtention, à partir du dispositif de mesure de longueur de tuyau (8), d'une valeur de la longueur du tuyau (2) enroulé vers le bas ou vers le haut, et
- la commande de l'unité d'entraînement (5) sur la base de ladite valeur obtenue du volume du matériau abrasif transporté par l'intermédiaire du tuyau (2) et sur la base de ladite valeur obtenue de la longueur du tuyau enroulé vers le bas ou enroulé vers le haut, afin de commander une position d'une partie d'extrémité (9) du tuyau (2) par rapport au matériau abrasif transporté par l'intermédiaire du tuyau (2).

11. Procédé selon la revendication 10 comprenant :
- le remplissage du tuyau (2) avec le matériau abrasif transporté par l'intermédiaire du tuyau (2),
- la fermeture d'une vanne agencée au niveau d'une extrémité (9') du tuyau (2) pour enfermer le matériau abrasif à l'intérieur du tuyau (2),
- le positionnement du tuyau (2) à l'intérieur d'un objet délimité (24) destiné à être rempli avec le matériau abrasif et
- l'ouverture de ladite vanne agencée au niveau de l'extrémité (9') du tuyau (2) pour la fourniture du matériau abrasif dans l'objet délimité (24) à remplir avec le matériau abrasif.

12. Procédé selon la revendication 11, dans lequel l'objet délimité (24) est un pôle.

13. Procédé selon l'une quelconque des revendications 10 à 12, comprenant :
- la fixation de l'unité enrouleur de tuyau (1) à une machine mobile, telle qu'une excavatrice, et
- le positionnement de l'unité enrouleur de tuyau (1) dans une position de travail au moyen de la machine mobile.

14. Procédé selon l'une quelconque des revendications 10 à 13, dans lequel l'unité d'entraînement (5) comprend un moteur hydraulique.

15. Procédé selon l'une quelconque des revendications 10 à 14, dans lequel le matériau abrasif est un béton non solidifié.
